# EUROPÄISCHE PATENTSCHRIFT

(11) **EP 3 155 677 B1**
(45) Veröffentlichungstag und Bekanntmachung des Hinweises auf die Patenterteilung: **25.04.2018**
(21) Anmeldenummer: 15724513.5
(22) Anmeldetag: 19.05.2015
(51) Int. Cl.: H01M 4/133, H01M 4/134, H01M 4/66, H01M 10/0525, C01B 33/029

(54) **VERFAHREN ZUR HERSTELLUNG EINES ELEKTRODENMATERIALS FÜR EINEN ELEKTROCHEMISCHEN ENERGIESPEICHER**
METHOD OF PRODUCING AN ELECTRODE MATERIAL FOR AN ELECTROCHEMICAL ENERGY STORAGE DEVICE
PROCÉDÉ DE PRODUCTION D'UN MATÉRIAU D'ÉLECTRODE POUR ACCUMULATEUR ÉLECTROCHIMIQUE

(30) Priorität: 12.06.2014 DE 102014008739
(43) Veröffentlichungstag der Anmeldung: 19.04.2017
(73) Patentinhaber: Daimler AG, 70327 Stuttgart (DE)
(72) Erfinder: HINTENNACH, Andreas, 71732 Tamm (DE)
(74) Vertreter: Moore, Derek
(86) Internationale Anmeldenummer: PCT/EP2015/001018
(87) Internationale Veröffentlichungsnummer: WO 2015/188912

(56) Entgegenhaltungen:
- WO-A1-2009/033015
- WO-A1-2012/067298
- JP-A- 2012 130 825
- US-A1- 2014 154 564

## Beschreibung

Die Erfindung betrifft ein Verfahren zur Herstellung eines Elektrodenmaterials für einen elektrochemischen Energiespeicher gemäß dem Oberbegriff des Anspruchs 1.

Aus der DE 10 2004 016 766 A1 ist ein Elektrodenmaterial für Lithium-Ionen-Batterien bekannt, wobei das Elektrodenmaterial 5 - 85 Gew.-% nanoskalige Siliziumpartikel aufweist, die eine BET-Oberfläche von 5 bis 700 m²/g und einen mittleren Primärpartikeldurchmesser von 5 bis 200 nm aufweisen. Weiterhin weist das Elektrodenmaterial 0 - 10 Gew.-% Leitruß, 5 - 80 Gew.-% Graphit mit einem mittleren Partikeldurchmesser von 1 µm bis 100 µm und 5 - 25 Gew.-% eines Bindemittels auf, wobei die Anteile der Komponenten in Summe maximal 100 Gew.-% ergeben.

Weiterhin ist aus der DE 10 2011 008 815 A1 ein Verfahren zur Herstellung von einem Kohlenstoffträger mit auf der Oberfläche befindlichen nanoskaligen Siliziumpartikeln sowie einen Kohlenstoffträger mit auf der Oberfläche befindlichen Siliziumpartikeln mit einer durchschnittlichen Partikelgröße von 1 nm bis 20 nm bekannt. Es ist vorgesehen, dass bei dem Verfahren ein Silizium-Precursor und der Kohlenstoffträger in einem inerten organischen Lösemittel miteinander in Kontakt gebracht werden, wobei der Silizium-Precursor durch Zugabe eines Reduktionsmittels und/oder durch Erwärmung in reines Silizium zerlegt wird, das sich auf dem Kohlenstoffträger abscheidet.

Ferner sind aus der WO 2009/033015 A1 ein Kohlenstoffnanofaserpapier mit einer Siliziumbeschichtung und aus der US 2014/0154564 A1 ein Elektrodenmaterial mit Kohlenstoffpartikeln und Silizium-Nanodrähten bekannt.

Der Erfindung liegt die Aufgabe zu Grunde, ein gegenüber dem Stand der Technik verbessertes Verfahren zur Herstellung eines Elektrodenmaterials für einen elektrochemischen Energiespeicher anzugeben.

Die Aufgabe wird erfindungsgemäß mit den in Anspruch 1 angegebenen Merkmalen gelöst.

Vorteilhafte Ausgestaltungen der Erfindung sind Gegenstand der Unteransprüche.

Ein Elektrodenmaterial für einen elektrochemischen Speicher ist aus einem Verbundmaterial gebildet, wobei das Verbundmaterial zumindest eine elektrisch leitfähige Matrix und ein Aktivmaterial umfasst und wobei die elektrisch leitfähige Matrix nanoskalige, röhrenförmige Strukturen aus Silizium umfasst.

Mittels des derart ausgebildeten Elektrodenmaterials ist eine mechanisch stabile Elektrode realisierbar, die zudem eine hohe elektrochemische Leistungsfähigkeit aufweist. Insbesondere durch die röhrenförmige Struktur des Silizium im Nanometerbereich kann eine hohe mechanische Flexibilität der elektrisch leitfähigen Matrix erreicht werden, die gegenüber aus dem Stand der Technik bekannten Siliziumstrukturen signifikant verbessert ist. Damit können volumetrische Änderungen der Elektrode, welche beim Laden und Entladen des elektrochemischen Speichers aufgrund Einlagerung und Auslagerung des Aktivmaterials bedingt sind, kompensiert werden. Dadurch kann eine Leistungsfähigkeit und eine Lebensdauer des elektrochemischen Speichers gegenüber dem Stand der Technik erheblich verbessert werden.

Das Aktivmaterial ist dabei chemisch lösbar an die nanoskaligen, röhrenförmigen Siliziumstrukturen gebunden, wobei chemisch lösbar hierbei die Möglichkeit der Auslagerung des Aktivmaterials während des Entladens des elektrochemischen Speichers meint. Dabei wird als Aktivmaterial beispielsweise Lithium in Lithium-Ionen und Elektronen oxidiert, wobei die Lithium-Ionen von der Anode zur Kathode wandern. Das Verbundmaterial des Elektrodenmaterials ist damit vorzugsweise als ein Beschichtungsmaterial für eine Anode ausgebildet.

Gemäß einem bevorzugten Ausführungsbeispiel umfasst die die elektrisch leitfähige Matrix zusätzlich eine poröse und mechanisch flexible Kohlenstoffstruktur, mittels welcher eine elektrische Leitfähigkeit des Elektrodenmaterials erhöht wird. Aufgrund der mechanisch flexiblen Ausgestaltung der Kohlenstoffstruktur kann die Kompensation der volumetrischen Änderungen der Elektrode beim Laden und Entladen zusätzlich verbessert werden.

Zur Herstellung des zuvor beschriebenen Elektrodenmaterials wird ein erfindungsgemäßes Verfahren vorgeschlagen, welches folgende Schritte umfasst:
a) Einfüllen einer bestimmten Menge von Trichlorsilan in ein erstes Gefäß;
b) Anordnen eines Teilstücks eines Siliziumwafers in einem zweiten Gefäß;
c) Verbinden der Gefäße mit einem Rohr und Verschließen des Rohrs mit einem Tropfen;
d) Bestrahlen des Trichlorsilans mit elektromagnetischer Hochfrequenzstrahlung;
e) Abtrennen eines auf dem Teilstück des Siliziumwafers abgeschiedenen Reaktionsprodukts.

Durch die Bestrahlung des Trichlorsilans gemäß Schritt d) wird dieses erwärmt, wobei der Tropfen, z. B. ein Glucosetropfen, innerhalb des Rohres schmilzt und das Trichlorsilan in das zweite Gefäß fließt, in dem das Teilstück des Siliziumwafers angeordnet ist. Durch Gasphasenabscheidung wird anschließend das Reaktionsprodukt auf dem Teilstück des Siliziumwafers in Form einer Beschichtung abgeschieden. Das Verfahren ermöglicht auf einfache und effiziente Weise die Herstellung eines Elektrodenmaterials, welches nanoskalige, röhrenförmige Siliziumstrukturen umfasst.

Zur Realisierung der nanoskaligen, röhrenförmigen Siliziumstrukturen bei der Gasphasenabscheidung wird das Trichlorsilan gemäß Schritt d) mit einer kontinuierlich ausgesendeten, elektromagnetischen Hochfrequenzstrahlung bestrahlt. Dies ist mittels eines modifizierten Mikrowellenofens möglich, welcher gegenüber allgemein bekannten Mikrowellenherden einen zweiten Hochspannungstransformator sowie zusätzlich zwei Hochspannungskondensatoren und vier Hochspannungsdioden umfasst. Die kontinuierlich ausgesendete Strahlung bewirkt eine kontinuierliche Erwärmung des Trichlorsilans, so dass insbesondere eine nanoskalige, röhrenförmige Siliziumstruktur herstellbar ist.

Eine Dimensionierung der nanoskaligen, röhrenförmigen Siliziumstrukturen ist dabei abhängig davon, welche Strahlungsleistung für die elektromagnetische Hochfrequenzstrahlung vorgegeben wird. Damit ist eine kontrollierte Dimensionierung der nanoskaligen, röhrenförmigen Siliziumstrukturen möglich.

Ausführungsbeispiele der Erfindung werden im Folgenden anhand von Zeichnungen näher erläutert.

Dabei zeigen:
- Fig. 1: schematisch eine Explosionsdarstellung einer Einzelzelle für eine Batterie,
- Fig. 2: schematisch eine perspektivische Ansicht einer Vorrichtung zur Durchführung des Verfahrens gemäß Figur 2 und
- Fig. 3: schematisch eine elektrische Schaltung einer Leistungselektronik eines Mikrowellenofens zur Bestrahlung eines Elektrodenmaterials während der Herstellung des Elektrodenmaterials.

Einander entsprechende Teile sind in allen Figuren mit den gleichen Bezugszeichen versehen.

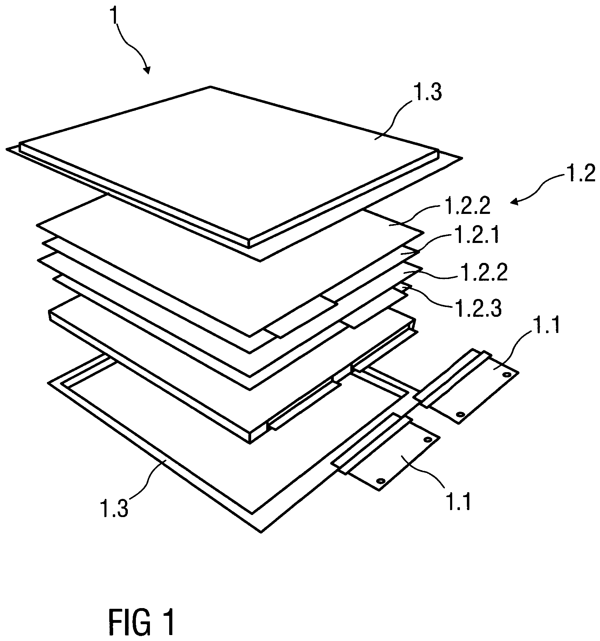

In Figur 1 ist eine Einzelzelle 1 für eine nicht näher dargestellte Batterie gezeigt. Bei der Batterie handelt es sich insbesondere um eine aufladbare Batterie, z. B. eine Lithium-Schwefel-Batterie.

Bei der Einzelzelle 1 handelt es sich um eine sogenannten Pouch- oder Coffee-Bag-Zelle, wobei zur Bildung der Batterie eine Anzahl solcher Einzelzellen 1 elektrisch seriell und/oder parallel miteinander verschaltet ist und wobei die Verschaltung über blechförmige Ableiter 1.1 als elektrische Anschlüsse der Einzelzelle 1 erfolgt.

Eine solche Einzelzelle 1 ist als ein flaches, weitestgehend rechteckförmiges Speicherelement für Elektroenergie ausgeführt, welches eine Elektrodenfolienanordnung 1.2 aus Lagen mehrerer abwechselnd gestapelter, folienartiger Anoden 1.2.1, Separatoren 1.2.2 und Kathoden 1.2.3 umfasst, die von einer aus zwei schalenartig geformten Folienabschnitten gebildeten folienartigen Hülle 1.3 umgeben ist.

Die Anode 1.2.1 ist hierbei als eine negative Elektrode und die Kathode 1.2.3 als eine positive Elektrode ausgebildet. Die Anode 1.2.1 und die Kathode 1.2.3 werden im Folgenden auch als Elektroden zusammengefasst bezeichnet.

Die Elektroden der Einzelzelle 1 sind jeweils aus einem Substrat gebildet und mit einer elektrisch leitfähigen Matrix, in die ein Aktivmaterial in definierter Art und Weise eingebunden ist, beschichtet. Die Elektroden sind hierbei als Festkörper ausgebildet, wobei die Batterie vorzugsweise auch für hohe Temperaturbereiche und damit als Hochtemperatur-Batterie eingesetzt werden kann.

Die elektrisch leitfähige Matrix für die Kathode ist beispielsweise aus einer elektrisch leitfähigen Kohlenstoffstruktur, wie z. B. Graphit oder Ruß, gebildet. Die elektrisch leitfähige Matrix für die Anode 1.2.1 ist aus einer elektrisch leitfähigen Kohlenstoffstruktur und einer Siliziumstruktur gebildet, da Silizium zwar eine weniger gute elektrische Leitfähigkeit aufweist als Kohlenstoff, dafür aber eine größere Menge von Aktivmaterial einbinden kann.

Das Aktivmaterial kann homogen über die gesamte Elektrode in die elektrisch leitfähige Matrix eingebunden werden. Das Aktivmaterial dient einer zwischen der Anode 1.2.1 und der Kathode 1.2.3 ablaufenden chemischen Reaktion, insbesondere bei einem Ladevorgang und Entladevorgang der Batterie. Ist die Batterie als eine Lithium-Schwefel-Batterie ausgebildet, so ist das Aktivmaterial für die Kathode 1.2.3 z. B. Schwefel und für die Anode 1.2.1 Lithium oder eine Lithiumlegierung.

Beim Entladen der Batterie wird das in der in der Anode 1.2.1 interkalierte Lithium in Lithium-Ionen und Elektronen oxidiert. Die Lithium-Ionen wandern durch den ionenleitenden Separator 1.2.2 zur Kathode 1.2.3, während gleichzeitig die Elektronen über einen äußeren Stromkreis von der Anode 1.2.1 zur Kathode 1.2.3 übertragen werden, wobei zwischen der Kathode 1.2.3 und der Anode 1.2.1 ein Energieverbraucher zwischengeschaltet sein kann, welcher durch den Elektronenstrom mit Energie versorgt wird. An der Kathode 1.2.3 werden die Lithium-Ionen durch eine Reduktionsreaktion aufgenommen, wobei der Schwefel zu Lithiumsulfid reduziert wird. Die elektrochemische Reaktion beim Entladen einer Batterie ist allgemein bekannt und kann am Beispiel einer Lithium-Schwefel-Batterie wie folgt beschrieben werden:
Anode 1.2.1:

   Li → Li⁺ + e⁻;
Kathode 1.2.3:

   S₈ + 2Li⁺ + e⁻ → Li₂Se → Li₂S₆ → Li₂S₄ → Li₂S₂ → Li₂S

Beim Laden der Batterie wird an die Elektroden eine Energiequelle angeschlossen. Dabei wird das Lithium aus dem Lithiumsulfid zu Lithium-Kationen und Elektronen oxidiert, wobei die Lithium-Kationen über den Separator 1.2.2 und die Elektronen über den äußeren Stromkreis zurück zur Anode 1.2.1 wandern.

Die Einlagerung des Aktivmaterials, d. h. beispielsweise der Lithium-Ionen, beim Ladevorgang der Batterie sowie die Auslagerung des Aktivmaterial beim Entladen der Batterie führen bei den aus dem Stand der Technik bekannten Siliziumstrukturen, z. B. nanoskaligen, sphärischen Siliziumstrukturen, zu sehr starken volumetrischen Änderungen. Dies führt zu sehr starken mechanischen Belastungen des Elektrodenmaterials, wodurch ein vorzeitiger Ausfall der Elektrode bedingt durch eine teilweise oder vollständige Ablösung des Elektrodenmaterials von dem Substrat möglich ist.

Zur Lösung des Problems sieht die Erfindung vor, nanoskalige, röhrenförmige Siliziumstrukturen zur verwenden, die in die poröse und mechanisch flexible Kohlenstoffstruktur eingebunden sind.

Im Folgenden wird ein erfindungsgemäßes Verfahren zur Herstellung eines Elektrodenmaterials beschrieben.

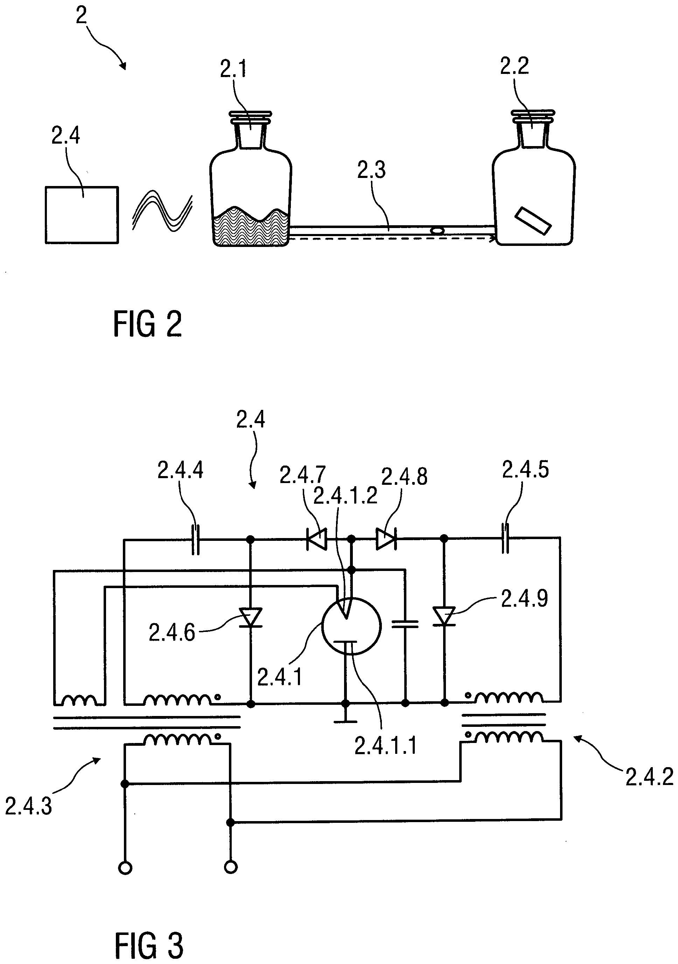

Dazu zeigt Figur 2 eine Vorrichtung 2 zur Durchführung des Verfahrens.

Die Vorrichtung 2 umfasst zwei Gefäße 2.1, 2.2 mit einem bestimmten Aufnahmevolumen von beispielsweise jeweils 10 ml. Die Gefäße 2.1, 2.2 sind jeweils mittels eines Verschlusselements in Form eines Stopfens, z. B. eines Stopfens aus Teflon, luftdicht verschlossen. In einem Ausführungsbeispiel sind die Gefäße 2.1, 2.2 jeweils aus einem optisch transparenten Werkstoff, wie z. B. Glas, gebildet.

In einem ersten Gefäß 2.1 ist eine bestimmte Menge, z. B. zwischen 1,0 und 1,5 ml, an sogenanntem Trichlorsilan eingefüllt. Trichlorsilan ist dabei ein Produkt aus reinem Silizium, welches mit Chlorwasserstoff zu Trichlorsilan reagiert.

In einem zweiten Gefäß 2.2 ist ein Teilstück eines Siliziumwafers angeordnet.

Die Gefäße 2.1, 2.2 sind mittels eines Rohrs 2.3, welches beispielsweise aus Glas gebildet ist, miteinander verbunden. In einem dem zweiten Gefäß 2.2 zugewandten Endbereich des Rohrs 2.3 ist ein Tropfen angeordnet, welcher beispielsweise aus Glucose oder aus einem anderen Saccharid gebildet ist. Der Tropfen bildet dabei eine künstliche Thrombose und verschließt somit das Rohr 2.3.

Des Weiteren umfasst die Vorrichtung 2 einen Mikrowellenofen 2.4, welcher elektromagnetische Hochfrequenzstrahlung erzeugt, mittels derer das in dem ersten Gefäß 2.1 enthaltene Trichlorsilan bestrahlt wird.

Die elektromagnetische Hochfrequenzstrahlung wird dabei kontinuierlich ausgesendet, was mit einer entsprechenden Leistungselektronik des Mikrowellenofens 2.4 möglich ist, die in Figur 3 näher dargestellt und beschrieben ist.

Durch die kontinuierliche Bestrahlung des Trichlorsilans mit elektromagnetischer Hochfrequenzstrahlung erhitzt sich dieses auf eine bestimmte Temperatur, ohne dass eine Abkühlung des Trichlorsilans stattfindet, wie es bei einer gepulsten Bestrahlung denkbar ist. Dabei steigt auch ein Druck innerhalb des ersten Gefäßes 2.1.

Nach einer sehr kurzen Zeitspanne von wenigen Sekunden schmilzt der Tropfen in dem Rohr 2.3, so dass in Folge eines Druckausgleichs zwischen dem ersten Gefäß 2.1 und dem zweiten Gefäß 2.2 das erhitzte Trichlorsilan in das zweite Gefäß 2.2 fließt.

Das Trichlorsilan reagiert dabei mit dem Siliziumwafer, wobei dieses zu Silizium und weiteren Nebenprodukten, wie z. B. Chlorwasserstoff, katalytisch zersetzt und als Reaktionsprodukt auf dem Siliziumwafer abgeschieden wird. Das Reaktionsprodukt scheidet sich dabei als eine Beschichtung auf dem Siliziumwafer ab. Mit voranschreitender Bestrahlung des Trichlorsilan färbt sich das Reaktionsprodukt entsprechend, z. B. wird eine Farbe der Beschichtung dunkler, woraus ein Ende der Reaktion schließbar ist.

Das auf dem Siliziumwafer abgeschiedene Reaktionsprodukt wird anschließend auf eine bestimmte Temperatur abgekühlt und kann mittels eines Schneidinstruments von dem Siliziumwafer abgetrennt werden. Durch die katalytische Zersetzung des Trichlorsilans und der Abscheidung des Reaktionsprodukts auf dem Siliziumwafer entstehen die erwünschten nanoskaligen, röhrenförmigen Siliziumstrukturen, die direkt ohne weitere Aufreinigungsprozesse zur Herstellung des Elektrodenmaterials verwendet werden können.

Eine Dimensionierung der nanoskaligen, röhrenförmigen Siliziumstrukturen kann dabei abhängig von einer Stärke der ausgesendeten elektromagnetischen Hochfrequenzstrahlung beeinflusst werden. Beispielsweise weisen die nanoskaligen, röhrenförmigen Siliziumstrukturen eine größere Länge auf, wenn die Bestrahlung des Trichlorsilans mit einer geringeren Leistung ausgesendet wird.

Figur 3 zeigt eine elektrische Schaltung des Mikrowellenofens 2.4 in Form eines Schaltbilds, wobei das Schaltbild nur einen Teil der elektrischen Schaltung des Mikrowellenofens 2.4 zeigt, insbesondere eine Leistungselektronik.

Der Mikrowellenofen 2.4 umfasst ein Magnetron 2.4.1 mit einer positiv geladenen Elektrode 2.4.1.1 und einer negativ geladenen Elektrode 2.4.1.2.

Die positiv geladene Elektrode 2.4.1.1 ist mit einem Massepotential verbunden, so dass die negativ geladene Elektrode 2.4.1.2 eine gegenüber dem Massepotential negative Spannung aufweist.

Zum Betrieb des Magnetrons 2.4.1, welches elektromagnetische Hochfrequenzwellen erzeugt, ist das Magnetron 2.4.1 mit zwei Hochspannungstransformatoren 2.4.2, 2.4.3 gekoppelt, die jeweils eine an einer ersten Spule angelegte Wechselspannung, insbesondere Netzspannung, in einer zweiten Spule auf einen vorgegebenen Pegel, insbesondere auf einen Pegel im Hochvoltbereich, erhöhen.

Die derart erzeugten Wechselhochspannungen werden jeweils mittels eines Hochspannungskondensators 2.4.4, 2.4.5 und einer Brückengleichrichterschaltung, umfassend jeweils zwei parallel zueinander geschaltete
Hochspannungsdioden 2.4.6 bis 2.4.9, geteilt, gleichgerichtet und an die negativ geladene Elektrode 2.4.1.2 des Magnetrons 2.4.1 angelegt.

Die an der negativ geladenen Elektrode 2.4.1.2 angelegten, gleichgerichteten, Hochspannungen wechseln dabei jeweils mit einer vorgegebenen Frequenz periodisch zwischen Null Volt und einer vorgegebenen Hochspannung zum Betrieb des Magnetrons 2.4.1. Dabei ist dem Magnetron 2.4.1 eine bestimmte Schwellspannung zugeordnet. Ist die an das Magnetron 2.4.1 angelegte Hochspannung größer als die Schwellspannung, so fließt kurzzeitig ein Strom durch das Magnetron 2.4.1.

Der hier beschriebene Mikrowellenofen 2.4 zeichnet sich insbesondere durch einen zweiten Hochspannungstransformator 2.4.3, der zwei Hochspannungskondensatoren 2.4.4, 2.4.5 und der Brückengleichrichterschaltung aus, wodurch eine kontinuierlich ausgesendete Hochfrequenzstrahlung möglich ist. Dazu übersteigen die an dem Magnetron 2.4.1 angelegten Hochspannungen abwechselnd die Schwellspannung, so dass kontinuierlich ein Strom durch das Magnetron 2.4.1 fließt.

Mittels der kontinuierlichen Bestrahlung des Trichlorsilans wird ein Abkühlen des Trichlorsilans, wie es bei einer gepulsten Bestrahlung denkbar ist, weitestgehend verhindert. Damit kann eine optimale Abscheidung des Reaktionsprodukts auf dem Siliziumwafer und damit die Entstehung der nanoskaligen, röhrenförmigen Siliziumstrukturen ermöglicht werden.

## Patentansprüche

1. Verfahren zur Herstellung eines Elektrodenmaterials für einen elektrochemischen Energiespeicher, welches aus einem Verbundmaterial gebildet wird, wobei
- das Verbundmaterial zumindest eine elektrisch leitfähige Matrix und ein Aktivmaterial umfasst, und
- die elektrisch leitfähige Matrix nanoskalige, röhrenförmige Strukturen aus Silizium umfasst,
**gekennzeichnet durch** folgende Schritte:
a) Einfüllen einer bestimmten Menge von Trichlorsilan in ein erstes Gefäß (2.1);
b) Anordnen eines Teilstücks eines Siliziumwafers in einem zweiten Gefäß (2.2);
c) Verbinden der Gefäße (2.1, 2.2) mit einem Rohr (2.3) und Verschließen des Rohrs (2.3) mit einem Tropfen;
d) Bestrahlen des Trichlorsilans mit elektromagnetischer Hochfrequenzstrahlung;
e) Abtrennen eines auf dem Teilstück des Siliziumwafers abgeschiedenen Reaktionsprodukts.

2. Verfahren nach Anspruch 1,
**dadurch gekennzeichnet, dass** das Trichlorsilan gemäß Schritt d) mit einer kontinuierlich ausgesendeten elektromagnetischen Hochfrequenzstrahlung bestrahlt wird.

3. Verfahren nach Anspruch 1 oder 2,
**dadurch gekennzeichnet, dass** eine Dimensionierung der nanoskaligen, röhrenförmigen Siliziumstrukturen abhängig davon ist, welche Strahlungsleistung für die elektromagnetische Hochfrequenzstrahlung vorgegeben wird.

## Claims

1. Method for producing an electrode material made of a composite material for an electrochemical energy storage device, wherein
- the composite material comprises at least one electrically conductive matrix and an active material, and
- the electrically conductive matrix comprises nanoscalic tubular structures of silicon,
**characterised by** the following steps:
a) the placing of a defined quantity of trichlorosilane in a first vessel (2.1);
b) the arrangement of a part of a silicon wafer in a second vessel (2.2);
c) the connection of the vessels (2.1, 2.2) using a tube (2.3) and the closing of the tube (2.3) with a drop;
d) the irradiation of the trichlorosilane with electromagnetic high-frequency radiation;
e) the detaching of a reaction product deposited on the part of the silicon wafer.

2. Method according to claim 1,
**characterised in that** the trichlorosilane is irradiated with continuously emitted electromagnetic high-frequency radiation according to step d).

3. Method according to claim 1 or 2,
**characterised in that** a dimensioning of the nanoscalic tubular silicon structures depends on the radiation power preset for the electromagnetic high-frequency radiation.

## Revendications

1. Procédé de fabrication d'un matériau d'électrode pour un accumulateur d'énergie électrochimique qui est constitué d'un matériau composite,
- le matériau composite comprenant au moins une matrice électroconductrice et un matériau actif et
- la matrice électroconductrice comprend des structures tubulaires, nanométriques au en silicium, **caractérisé par** les étapes suivantes :
a) remplir d'une certaine quantité de trichorosilane un premier contenant (2.1) ;
b) disposer un élément partiel d'une tranche de silicium dans un second contenant (2.2) ;
c) relier les contenants (2.1 ; 2.2) au moyen d'un tube (2.3) et fermer le tube (2.3) à l'aide d'un bouchon ;
d) soumettre le trichlorosilane à un rayonnement haute fréquence électromagnétique ;
e) séparer un produit de réaction isolé sur l'élément partiel de la tranche de silicium.

2. Procédé selon la revendication 1, **caractérisé en ce que** le trichlorosilane selon l'étape d) est soumis au rayonnement continu émis par un rayonnement haute fréquence électromagnétique.

3. Procédé selon la revendication 1 ou la revendication 2, **caractérisé en ce qu'**un dimensionnement des structures de silicium tubulaires nanométriques dépend de la puissance du rayonnement haute fréquence électromagnétique prédéfini.
